# EUROPÄISCHE PATENTSCHRIFT

(11) **EP 3 250 435 B1**
(45) Veröffentlichungstag und Bekanntmachung des Hinweises auf die Patenterteilung: **12.05.2021**
(21) Anmeldenummer: 16706962.4
(22) Anmeldetag: 26.01.2016
(51) Int. Cl.: B61C 15/10, B60B 39/00, B65G 53/46

(54) **SANDUNGSANLAGE MIT GESCHÜTZTEM MOTOR**
SANDING SYSTEM COMPRISING A PROTECTED MOTOR
SYSTÈME DE SABLAGE À MOTEUR PROTÉGÉ

(30) Priorität: 28.01.2015 AT 500562015
(43) Veröffentlichungstag der Anmeldung: 06.12.2017
(73) Patentinhaber: Knorr-Bremse Gesellschaft mit beschränkter Haftung, 2340 Mödling (AT)
(72) Erfinder: KRISMANIC, Georg, 1020 Wien (AT); LANG, Andreas, 1050 Wien (AT); SCHNEIDER, Albert, 1020 Wien (AT)
(74) Vertreter: Aurigium Leischner & Luthe
(86) Internationale Anmeldenummer: PCT/AT2016/050015
(87) Internationale Veröffentlichungsnummer: WO 2016/118996

(56) Entgegenhaltungen:
- WO-A1-96/20094
- WO-A1-2015/055699
- AT-A1- 505 783
- DE-A1- 3 009 332
- DE-C- 572 411

## Beschreibung

Die Erfindung betrifft eine Sandungsanlage für ein Schienenfahrzeug.

Grundsätzlich sind solche Sandungsanlagen bekannt. Beispielsweise offenbart die AT 505 783 A1 dazu ein Streugerät mit einem aus einem Sandbehälter kommenden Sandzulauf, welcher in ein rotierendes Zellenrad mündet, das mit sternförmig angeordneten Kammern zum Füllen des Sandflusses versehen ist.

Nachteilig ist an den bekannten Bauformen, dass der Antriebsmotor aufgrund der Einbaulage den im Betrieb eines Schienenfahrzeugs auftretenden Umwelteinflüssen (Feuchtigkeit, Temperatur, Schmutz, etc.) vergleichsweise stark ausgesetzt ist.

Die Druckschrift WO 96/20094 A1 offenbart ein Anti-Rutsch-Material für ein Fahrzeug und eine Anlage zum Ausgeben des Materials.

Die Druckschrift DE 572 411 C offenbart eine motorisch angetriebene Sandschleudervorrichtung für Kraftfahrzeuge.

Die Druckschrift WO 2015/055699 A1 offenbart eine Austragseinrichtung für Granulat.

Eine Aufgabe der Erfindung ist es daher, eine verbesserte Sandungsanlage anzugeben. Insbesondere soll der Antriebsmotor des Zellenrads besser vor den im Betrieb eines Schienenfahrzeugs auftretenden Umwelteinflüssen geschützt werden und eine schlanke Bauweise der Sandungsanlage ermöglicht werden.

Die Aufabe der Erfindung wird durch eine Sandungsanlage nach Anspruch 1 gelöst.

Die Aufgabe der Erfindung wird auch mit einem Schienenfahrzeug gelöst, das eine Sandungsanlage der genannten Art umfasst.

Auf diese Weise rückt der Motor weiter von den Schienen weg und weiter in das Innere des Schienenfahrzeugs hinein. Der Motor ist daher relativ gut vor den im Betrieb des Schienenfahrzeugs auftretenden Umwelteinflüssen geschützt. Zudem ergibt sich eine relativ schlanke Bauweise der Sandungsanlage, wodurch der Einbau in das Schienenfahrzeug begünstigt wird.

Die Lageangaben "oben", "unten", "oberhalb", "unterhalb", usw. beziehen sich auf die Lage der Sandungsanlage im Betrieb. Allgemein ausgedrückt ist der Motor demzufolge auf der Seite des Einlasses und gegenüberliegend vom Auslass angeordnet.

Vorteilhafte Ausgestaltungen und Weiterbildungen der Erfindung ergeben sich aus den Unteransprüchen sowie aus der Beschreibung in Zusammenschau mit den Figuren.

Günstig ist es, wenn die Drehachse des Zellenrads vertikal ausgerichtet ist. Dadurch kann der Antriebsmotor für das Zellenrad besonders gut oberhalb des Einlasses der Zellenradschleuse angeordnet werden, indem beispielsweise eine entsprechend lange, vom Zellenrad zum Motor führende Welle vorgesehen wird.

Günstig ist es zudem, wenn die Drehachse des Zellenrads und die Motorwelle parallel zueinander ausgerichtet oder koaxial oder winkelig zueinander angeordnet sind. Dadurch ergibt sich die Möglichkeit, Motor und Zellenrad direkt zu koppeln, beziehungsweise über ein Stirnradgetriebe, Riemengetriebe, Kegelradgetriebe oder eine Kette.

Generell ist der Einsatz eines Getriebes für die Kopplung des Motors mit dem Zellenrad von Vorteil, um die Drehzahl des Motors auf die am Zellenrad gewünschte Drehzahl zu untersetzen. Neben den bereits oben angeführten Möglichkeiten kann beispielsweise auch ein Planetengetriebe, ein Kegelradgetriebe, ein Kronenradgetriebe oder ein Torus-Getriebe (erhältlich bei der Firma Tedec AG, http://torus-gear.com) eingesetzt werden.

Günstig ist es auch, wenn der Motor über eine Welle mit dem Zellenrad gekoppelt ist, welche aus dem Sandbehälter respektive aus der Sandzuleitung herausgeführt ist. Auf diese Weise ist der Motor gut zugänglich.

Günstig ist es darüber hinaus, wenn im Verlauf der genannten Welle eine Kupplung vorgesehen ist. Dadurch können die Wellenabschnitte für Revisionszwecke getrennt werden. Im Betrieb ist die Kupplung jedoch nicht lösbar.

Vorteilhaft ist es, wenn der Einlass der Zellenradschleuse mit einem Behälter zur Aufnahme von Bremssand verbunden ist und der Motor oberhalb des genannten Behälters angeordnet ist. Auf diese Weise ist der Motor gut geschützt, jedoch auch gut zugänglich.

Vorteilhaft ist es zudem, wenn der der Einlass der Zellenradschleuse mit einem Behälter zur Aufnahme von Bremssand verbunden ist und der Motor in dem genannten Behälter angeordnet ist. Auf diese Weise wird der Motor gut vor Umwelteinflüssen geschützt.

Besonders vorteilhaft ist es, wenn der Behälter zumindest abschnittsweise ringförmig mit einer inneren Wandung und einer äußeren Wandung ausgebildet ist und der Motor innerhalb der inneren Wandung angeordnet ist. Auf diese Weise wird der Motor sowohl besonders gut vor äußeren Umwelteinflüssen als auch vor dem Kontakt mit dem Bremssand geschützt. Der Sandkasten ist kreiszylindrisch ausgeführt.

In einer besonders vorteilhaften Variante der Sandungsanlage ist der von der inneren Wandung eingeschlossene Hohlraum durch eine nach oben gewölbte Abdeckung abgedeckt, insbesondere kegelförmig oder halbkugelförmig. Auf diese Weise kann der Sand gut um den für den Motor vorgesehenen Bereich im Sandkasten herum fließen.

Besonders vorteilhaft ist es auch, wenn der von der inneren Wandung eingeschlossene Hohlraum durch einen vom Motor angetriebenen Rührer/Aktivator abgedeckt ist. Dadurch wird die oben genannte Fließfähigkeit des Bremssands noch einmal verbessert.

Besonders vorteilhaft ist es weiterhin, wenn die Sandungsanlage eine Zuluftleitung aufweist, welche in den von der inneren Wandung eingeschlossene Hohlraum führt, und eine Abluftleitung, welche aus dem genannten Hohlraum führt. Auf diese Weise ist es möglich, den Motor zu kühlen, beispielsweise indem ein Gebläse an die Zuluftleitung oder Abluftleitung angeschlossen wird. Denkbar ist insbesondere auch, die Zuluftleitung in Fahrtrichtung des Schienenfahrzeugs und/oder die Abluftleitung quer zur genannten Fahrtrichtung auszurichten, um den bei zunehmender Fahrtgeschwindigkeit steigenden Staudruck / sinkenden statischen Druck auszunutzen.

Besonders vorteilhaft ist es schließlich auch, wenn die Sandungsanlage eine Zuluftleitung aufweist, welche in den von der inneren Wandung eingeschlossenen Hohlraum führt, sowie Abluftöffnungen in der inneren Wandung. Auf diese Weise kann die vom Motor erwärmte Kühlluft zur Trocknung des Bremssands eingesetzt werden. Möglich ist wiederum der Anschluss eines Gebläses an die Zuluftleitung oder deren Ausrichtung in Fahrtrichtung des Schienenfahrzeugs. Auch ist es möglich, den Sog, der beim Abtransport des Bremssands entsteht, für das Ansaugen von Kühlluft auszunutzen.

Zum besseren Verständnis der Erfindung wird diese anhand der nachfolgenden Figuren näher erläutert.

Es zeigen jeweils in stark vereinfachter, schematischer Darstellung:
- Fig. 1: ein erstes schematisch dargestelltes Beispiel einer Sandungsanlage mit einem oberhalb des Sandbehälters angeordneten Motor in Explosionsdarstellung;
- Fig. 2: wie Fig. 1, jedoch mit einem oberhalb des Sandbehälters angeordneten Getriebe;
- Fig. 3: wie Fig. 1, jedoch mit einem im Sandbehälter angeordneten Planetengetriebe;
- Fig. 4: wie Fig. 1, jedoch mit einer Kupplung im Verlauf der Antriebswelle;
- Fig. 5: ein Beispiel einer Sandungsanlage mit einem im Sandbehälter angeordneten Motor;
- Fig. 6: wie Fig. 5, jedoch mit einem oberhalb des Motors angeordneten Rührer;
- Fig. 7: eine schematische Schnittdarstellung einer Sandungsanlage mit einem Motor, der in einem ringförmigen Sandbehälter angeordnet ist;

- Fig. 8: wie Fig. 7, jedoch mit Kühlluftleitungen;
- Fig. 9: ähnlich wie Fig. 7, jedoch mit Luftaustrittsöffnungen, welche in den Sandbehälter münden;
- Fig. 10: ähnlich wie Fig. 7, jedoch mit einem vom Motor angetriebenen und oberhalb der Zellenradschleuse liegendem Aktivator;
- Fig. 11: eine schematisch dargestellte Zellenradschleuse mit horizontal ausgerichteter Zellenrad-Drehachse und
- Fig. 12: eine schematische Darstellung eines Schienenfahrzeugs mit einer eingebauten Sandungsanlage.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und bei einer Lageänderung sinngemäß auf die neue Lage zu übertragen.

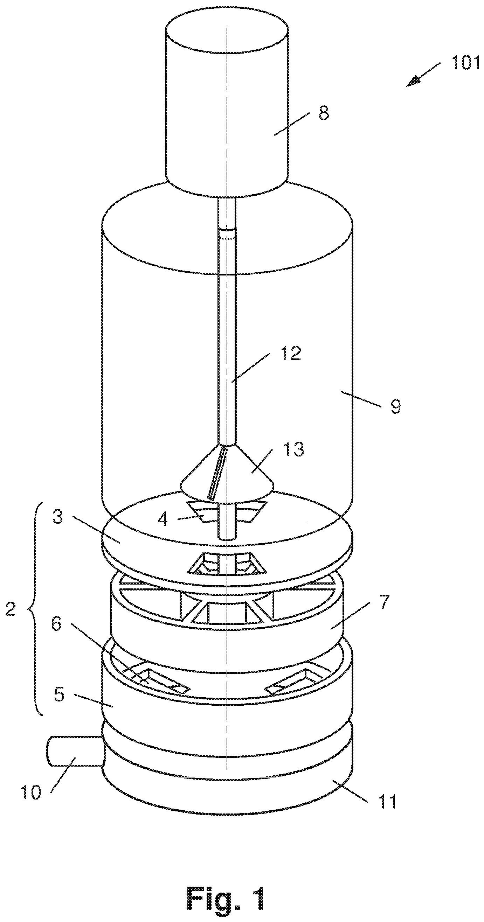

Fig. 1 zeigt ein erstes Beispiel einer Sandungsanlage 101 für ein Schienenfahrzeug in Explosionsdarstellung. Die Sandungsanlage 101 umfasst eine Zellenradschleuse 2 mit einem Gehäuse, das einen Gehäuseoberteil 3 und einen Gehäuseunterteil 5 sowie ein im Gehäuse 3, 5 drehbar gelagertes Zellenrad 7 mit mehreren Zellen aufweist. Der Gehäuseoberteil 3 weist oberhalb des Zellenrads 7 angeordnete Einlässe 4 auf und der Gehäuseunterteil 5 unterhalb des Zellenrads 7 angeordnete Auslässe 6. Weiterhin umfasst die Sandungsanlage 101 einen mit dem Zellenrad 7 gekoppelten Motor 8, einen mit den Einlässen 4 der Zellenradschleuse 2 verbundenen Behälter 9 zur Aufnahme von Bremssand und eine mit den Auslässen 6 der Zellenradschleuse 2 verbundene Ableitung 10 zum (Ab)Transport von Bremssand. Die Ableitung 10 ist in diesem Beispiel über einen Sammler 11 an die Zellenradschleuse 2 angebunden. Der Motor 8 ist oberhalb der genannten Einlässe 4 angeordnet und in dem in Fig. 1 konkret dargestellten Beispiel über eine Welle 12 mit dem Zellenrad 7 gekoppelt, welche aus dem genannten Behälter 9 herausgeführt ist. In diesem Beispiel ist der Motor 8 somit nicht nur über den Einlässen 4, sondern auch oberhalb des Behälters 9 angeordnet. Zusätzlich umfasst die Sandungsanlage 101 einen optionalen mit der Welle 12 gekoppelten Rührer 13, welcher im Behälter 9 angeordnet ist.

In der Fig. 1 ist der Behälter 9 zwecks der besseren Darstellbarkeit durchsichtig dargestellt. Zudem ist die Welle 12 gegebenenfalls länger dargestellt, als sie in der Realität ist, um die Kopplung zwischen dem Zellenrad 7 und dem Motor 8 auch in der Explosionszeichnung deutlich darstellen zu können.

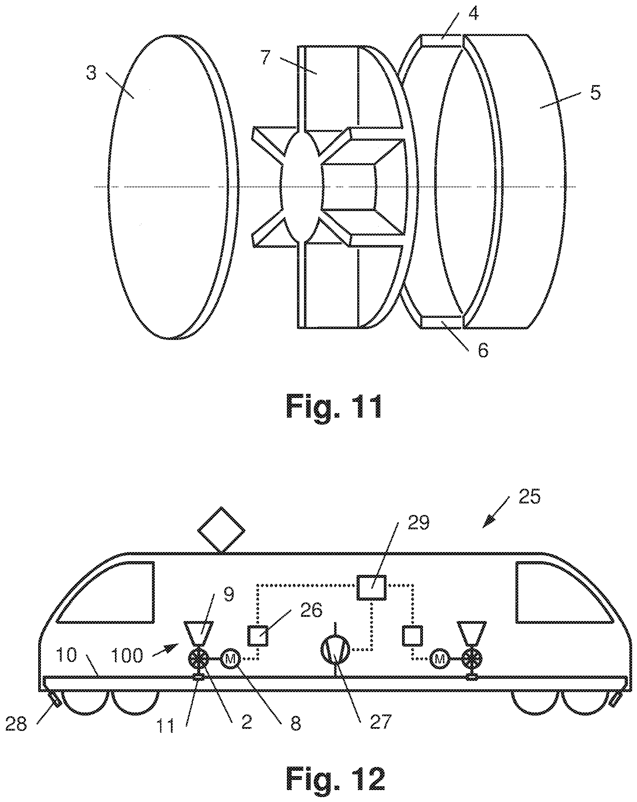

Die Funktion der in der Fig. 1 dargestellten Sandungsanlage 101 ist nun wie folgt:
In den Behälter 9 gefüllter Bremssand dringt über die beiden Einlässe 4 in die Kammern des Zellenrads 7 vor, gelangt im Stillstand des Zellenrads 7 von dort aber nicht weiter. Wird das Zellenrad 7 mit Hilfe des Motors 8 in Rotation versetzt, so schieben die Zellenradflügel den in den Zellenradkammern befindlichen Sand zu den Auslässen 6, wo er hindurch in den Sammler 11 fällt und von dort über das Abführrohr 10 abtransportiert wird, beispielsweise mit Hilfe von Druckluft. Über den von der Welle 12 angetriebenen Rührer 13 wird verhindert, dass der Sand verklumpt. Dieser kann zu diesem Zweck wie dargestellt Rippen aufweisen, jedoch auch mit etwas weiter auskragenden Rührflügeln ausgestattet sein. Der abtransportierte Bremssand wird dann zu den Rädern eines Schienenfahrzeugs geleitet und verbessert dessen Traktion beim Anfahren und Bremsen (siehe auch Fig. 12)

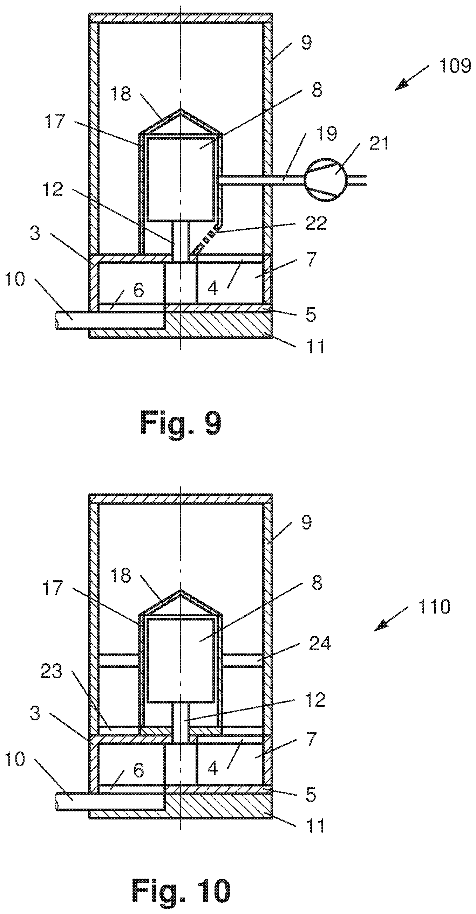

In dem in Fig. 1 dargestellten Beispiel weist das Gehäuse 3, 5 zwei Einlässe 4 und zwei Auslässe 6 auf. Weiterhin weist das Zellenrad 7 sechs Kammern auf. Selbstverständlich ist dies nur als illustratives Beispiel zu sehen. Natürlich kann die Zahl der Einlässe 4 und Auslässe 6 sowie der Kammern auch von der Darstellung abweichen. Anstelle des Rührers 13 oder zusätzlich zu diesem kann auch ein Aktivator vorgesehen sein, welcher insbesondere durch ein direkt ober dem Gehäuseoberteil 3 angeordnetes Flügelrad gebildet sein kann, das rieselfähiges Gut in die Kammern des Zellenrads 6 befördert und für eine gute Befüllung derselben sorgt (vergleiche auf Fig. 10). Im Speziellen kann ein solcher Aktivator auch mit einem (glatten) Kegel kombiniert werden. Ein Rührer 13 kann insbesondere flügelartige Fortsätze oder Arme aufweisen, welche in das rieselfähige Gut rühren und damit auflockern.

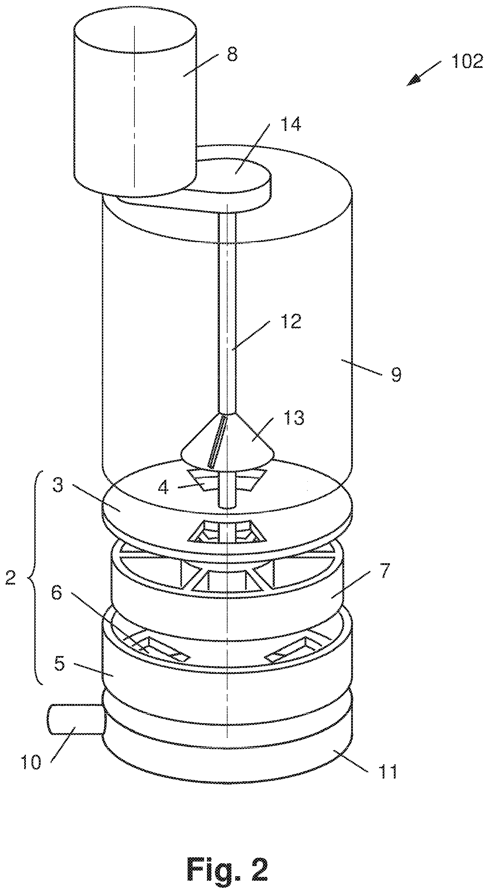

In der Fig. 1 sind die Drehachse des Zellenrads 7 und die Motorwelle koaxial angeordnet. Denkbar wäre aber auch, dass die beiden Achsen parallel zueinander ausgerichtet sind. Fig. 2 zeigt dazu ein Beispiel, bei dem der Motor 8 die Welle 12 über ein Getriebe 14 antreibt, das oberhalb des Behälters 9 angeordnet ist. Das Getriebe 14 kann beispielsweise als Riemengetriebe, Kettentrieb oder auch als Stirnradgetriebe ausgebildet sein. Als Riemen kommen zum Beispiel Flachriemen, Rundriemen, Keilriemen oder Keilrippenriemen in Betracht.

Selbstverständlich sind eine parallele beziehungsweise koaxiale Ausrichtung der Drehachse des Zellenrads 7 und der Motorwelle nicht zwingend, sondern diese können auch winkelig zueinander angeordnet sein. Beispielsweise können der Motor 8 und die Welle 12 über ein Kegelradgetriebe, Kronenradgetriebe, Schneckengetriebe oder auch über ein Torusgetriebe (erhältlich bei der Firma Tedec AG, http://torus-gear.com) miteinander gekoppelt sein. Darüber hinaus ist es auch möglich, die Welle 12 und die Motorwelle winkelig zueinander auszurichten und beispielsweise über ein Kegelradgetriebe miteinander zu koppeln.

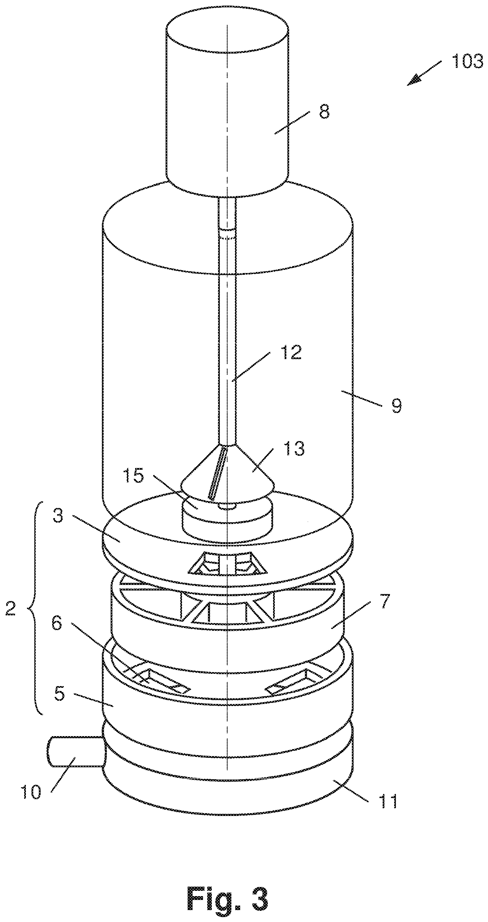

Fig. 3 zeigt nun ein weiteres Beispiel, bei dem im Verlauf der Welle 12 ein Planetengetriebe 15 vorgesehen ist. Dieses erlaubt eine koaxiale Anordnung von Zellenrad 7 und Motor 8. In dem dargestellten Beispiel ist das Planetengetriebe 15 in der Nähe der Zellenradschleuse 2 angeordnet, beziehungsweise direkt darauf montiert. Auf diese Weise kann die Welle 12 relativ dünn ausgeführt werden. Zudem ergibt sich dadurch auch der Vorteil dass der Rührer 13 mit einer anderen Drehzahl als das Zellenrad 7 betrieben werden kann. Selbstverständlich kann das Planetengetriebe 15, wie das Getriebe 14, aber auch oberhalb des Sandbehälters 9 angeordnet werden. In äquivalenter Weise ist vorstellbar, dass das Getriebe 15 näher beim Zellenrad 7 und teilweise im Sandbehälter 9 angeordnet ist.

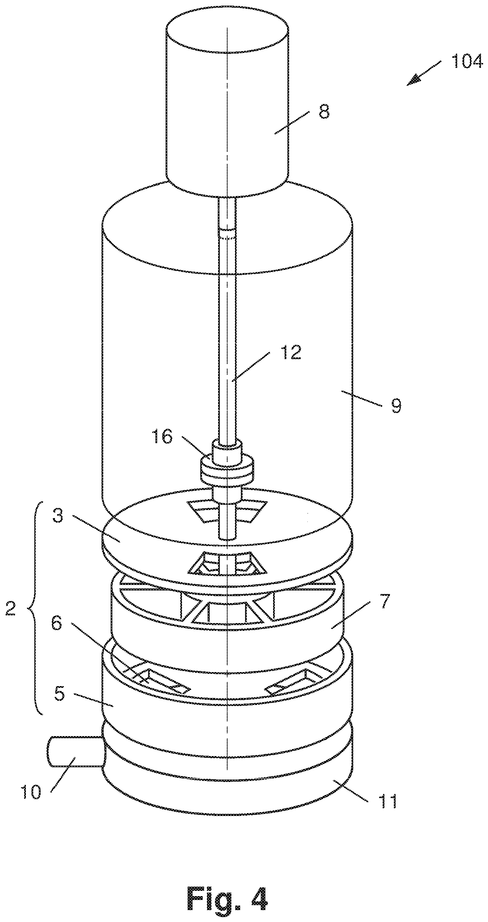

Fig. 4 zeigt ein Beispiel mit einer im Verlauf der Welle 12 angeordneten Kupplung 16. Die Kupplung 16 ist in diesem Beispiel im Betrieb nicht lösbar, dient aber dazu, die Wellenabschnitte für Revisionszwecke zu trennen. In dem in Fig. 4 gezeigten Beispiel ist kein Rührer 13 vorgesehen. Selbstverständlich kann die Kupplung 16 auch in Kombination mit einem Rührer 13/Aktivator oder einem Getriebe 14, 15 eingesetzt werden. Auch kann die Kupplung 16 an anderer Stelle angeordnet sein, und es kann auch mehr als eine Kupplung 16 vorgesehen sein.

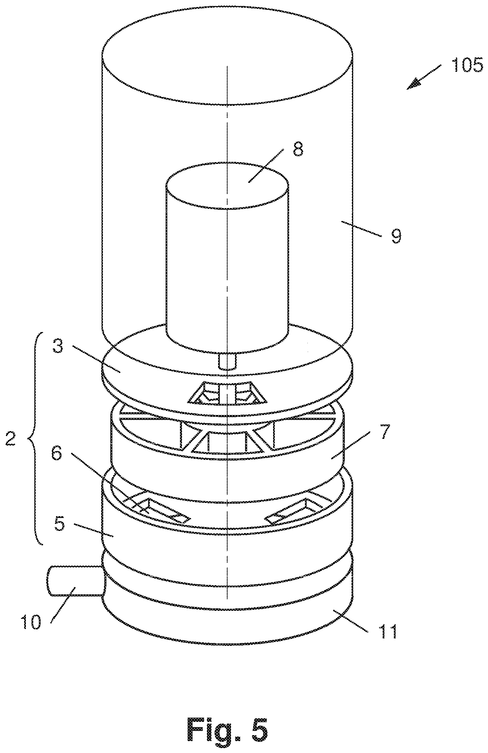

Fig. 5 zeigt nun eine weitere Variante einer Sandungsanlage 105, bei welcher der Motor 8 für das Zellenrad 7 im Sandbehälter 9 angeordnet ist. Der Motor 8 ist daher vor Umwelteinflüssen besonders gut geschützt.

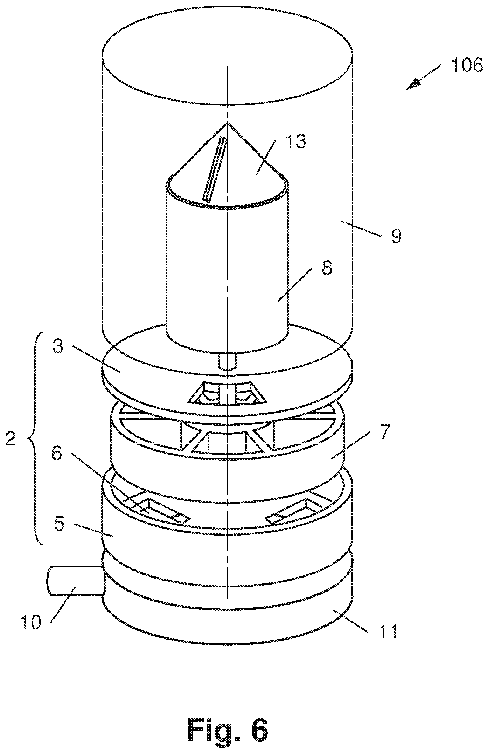

Die Sandungsanlage 106 der Fig. 6 ist ähnlich wie die in der Fig. 5 dargestellte Sandungsanlage 105 aufgebaut. In der Fig. 6 ist oberhalb des Motors 8 jedoch ein Rührer 13 vorgesehen, welcher vom Motor 8 mit angetrieben wird. Alternativ ist auch vorstellbar, dass der obere Bereich des (feststehenden) Motorgehäuses bombiert, insbesondere halbkugelförmig oder kegelförmig ausgebildet ist, und auf diese Weise ein Fließen des Sands rund um den Motor 8 ermöglicht wird.

Denkbar ist auch, dass der Rührer 13 exzentrisch gelagert ist oder anstelle des Rührers 13 ein glatter Kegel (Vibrator) vorgesehen ist. Durch die entstehenden Vibrationen wird das rieselfähige Gut (zusätzlich) aufgelockert. Vorteilhaft dreht sich der Vibrator schneller als das Zellenrad 7, bevorzugt synchron mit dem Motor 8. Denkbar ist natürlich auch, dass ein Getriebe zwischen Motor 8 und Vibrator geschaltet ist. Vorteilhaft ist es auch, wenn der Vibrator nur gleichzeitig mit dem Zellenrad 7 läuft, um eine unerwünschte Verdichtung des rieselfähigen Guts zu vermeiden. In der Fig.6 wird dies dadurch bewirkt, dass der Vibrator direkt auf der Welle des Motors 9 sitzt.

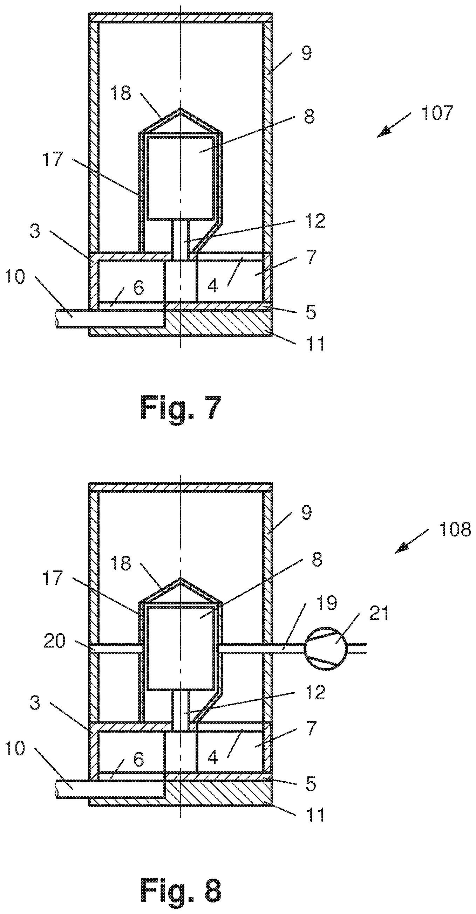

In einer weiteren vorteilhaften Ausführungsvariante ist der Behälter 9 zumindest abschnittsweise ringförmig mit einer inneren Wandung und einer äußeren Wandung ausgebildet, und der Motor 8 ist innerhalb der inneren Wandung angeordnet. Fig. 7 zeigt dazu ein erstes Beispiel in Schnittdarstellung, welches ähnlich zu der in Fig. 6 dargestellten Sandungsanlage 106 ist. Im Unterschied dazu braucht der Motor 8 jedoch nicht speziell abgedichtet sein, da er sich innerhalb der inneren Wandung 17 befindet. Ein weiterer Unterschied zu dem Beispiel aus Fig. 6 besteht darin, dass die Sandungsanlage 107 aus Fig. 7 keinen obenliegenden Rührer 13 aufweist, sondern stattdessen (starr) kegelförmig abgedeckt ist. Selbstverständlich könnte anstelle der kegelförmigen Abdeckung 18 auch eine flache Abdeckung, eine halbkugelförmige Abdeckung oder eine anders geformte nach oben gewölbte Abdeckung vorgesehen sein. Möglich ist natürlich auch der Einsatz des Rührers 13 oder eines Aktivators.

Fig. 8 zeigt ein weiteres Beispiel für eine Sandungsanlage 108, welche der in Fig. 7 dargestellten Sandungsanlage 107 sehr ähnlich ist. Im Unterschied dazu umfasst diese aber auch eine Zuluftleitung 19 , welche in den von der inneren Wandung 17 eingeschlossene Hohlraum führt, und eine Abluftleitung 20, welche aus dem genannten Hohlraum heraus führt. Mit Hilfe eines Gebläses 21 kann der Motor 8 gekühlt werden. Alternativ ist auch vorstellbar, dass die innere Wandung 17, wie in Fig. 9 dargestellt, Abluftöffnungen 22 aufweist, welche in den mit Bremssand gefüllten Bereich führen. Auf diese Weise erfüllt die Kühlluft einen Doppelnutzen, weil diese nicht nur der Kühlung des Motors 8 dient, sondern erwärmt auch für die Trocknung des Bremssands eingesetzt wird.

Fig. 10 zeigt eine weitere Variante einer Sandungsanlage 110, bei welcher ein unterhalb des Motors 8 angeordneter Aktivator 23 respektive Rührer über die Welle 12 angetrieben wird. Der Aktivator 23 kann als (zum Beispiel dreiflügeliges) Flügelrad gebildet sein und befördert das rieselfähige Gut in die Kammern des Zellenrads 6 beziehungsweise sorgt für eine gute Befüllung derselben.

Weiterhin ist in der Fig. 10 eine Abstützung 24 vorgesehen, welche beispielsweise aus mehreren Armen besteht, welche die innere Wandung 17 mit dem Behälter 9 verbinden. Diese Abstützung 24 ist zweckmäßig, da der Aktivator 23 ja drehbar gelagert ist. Selbstverständlich kann eine solche Abstützung 24 auch für die Ausführungsformen nach den Figuren 5 bis 9 vorgesehen sein oder in den Figuren 1 bis 4 auch die Welle 12 abstützen.

In den Beispielen nach den Figuren 1 bis 10 ist die Drehachse des Zellenrads 7 vertikal ausgerichtet. Denkbar wäre prinzipiell aber auch, dass dessen Drehachse horizontal ausgerichtet ist, so wie dies in der Fig. 11 rein schematisch dargestellt ist. Grundsätzlich können die bisher angeführten Ausführungsvarianten sinngemäß auch auf eine horizontal ausgerichtete Drehachse angewendet werden. Beispielsweise können die Drehachse des Zellenrads 7 und die Motorwelle parallel zueinander ausgerichtet und etwa über ein Stirnradgetriebe, ein Riemengetriebe oder eine Kette miteinander gekoppelt sein. Die Drehachse des Zellenrads 7 und die Motorwelle können aber auch winkelig zueinander angeordnet sein. Beispielsweise können der Motor 8 und das Zellenrad 7 über ein Kegelradgetriebe, Kronenradgetriebe, Schneckengetriebe oder auch über ein Torusgetriebe (erhältlich bei der Firma Tedec AG, http://torusgear.com) miteinander gekoppelt sein. Durch diese Getriebe ist eine Anordnung des Motors 8 oberhalb des Niveaus der Einlässe 4 auch bei horizontal ausgerichteter Drehachse des Zellenrads 7 möglich.

Im Speziellen sind die Einlässe 4 bei vertikaler Drehachse axial oberhalb des Zellenrads 7 angeordnet und die Auslässe 6 axial unterhalb des Zellenrads 7. Bei horizontaler Drehachse sind die Einlässe 4 Im Speziellen radial oberhalb des Zellenrads 7 angeordnet und die Auslässe 6 radial unterhalb des Zellenrads 7.

In den bisherigen Beispielen wurde davon ausgegangen, dass die Zellenradschleuse 2 direkt an einen Sandbehälter 9 gekoppelt ist. Denkbar wäre jedoch auch, dass der Sandbehälter 9 abgesetzt von der Zellenradschleuse 2 angeordnet und mit einer Leitung mit dieser verbunden ist. Sinngemäß kann eine mit dem Zellenrad 7 gekoppelte Welle 12 nicht nur aus dem Sandbehälter 9, sondern aus der genannten Zuleitung herausgeführt sein (vergleiche auch Fig. 1 bis 4)

Fig. 12 zeigt schließlich ein Beispiel einer in ein Schienenfahrzeug 25 eingebauten Sandungsanlage 100. Die Sandungsanlage 100 umfasst wiederum eine Zellenradschleuse 2, einen Sandbehälter 9, einen Sammler 11, einen Motor 8 sowie zusätzlich eine Steuerung 26. Der Sammler 11 ist an einen Kompressor 27 angeschlossen und auch über die Abführleitung 10 mit einem Fallrohr 28 verbunden. Im konkreten Beispiel umfasst das Schienenfahrzeug 25 zwei Sandungsanlagen 100, die mit einer zentralen Steuerung 29 verbunden sind.

Bei einer Bremsung veranlasst die zentrale Steuerung 29 die Motorsteuerung 26 der Zellenradschleuse 2 zum Aktivieren des Motors 8 und damit zum Drehen des Zellenrads 7. Gleichzeitig wird auch der Kompressor 27 oder, sofern der Kompressor 27 ohnehin läuft, lediglich ein Magnetventil in der Druckluftleitung aktiviert. Dadurch wird Bremssand dosiert vom Behälter 9 zum Fallrohr 28 transportiert und fällt von dort vor die Räder des Schienenfahrzeugs 25, um die Traktion beim Bremsen und beim Anfahren zu erhöhen.

An dieser Stelle wird darauf hingewiesen, dass das Zellenrad 7 in der Fig. 12 der besseren Aussagekraft der schematischen Darstellung mit horizontal ausgerichteter Drehachse gezeichnet wurde. Selbstverständlich bezieht sich die Fig. 12 uneingeschränkt auch für Zellenräder 7 mit vertikal ausgerichteter Drehachse und somit insbesondere auf die in den Figuren 1 bis 10 dargestellten Ausführungsformen. Weiterhin kann der Kompressor 27 an die Stelle des Kompressors/Gebläses 21 der Figuren 8 und 9 treten und an die Leitung 19 angeschlossen sein.

Die Ausführungsbeispiele zeigen mögliche Ausführungsvarianten einer erfindungsgemäßen Sandungsanlage 100..110 sowie eines erfindungsgemäßen Schienenfahrzeugs 25, wobei an dieser Stelle bemerkt sei, dass die Erfindung nicht auf die speziell dargestellten Ausführungsvarianten desselben eingeschränkt ist, sondern vielmehr auch diverse Kombinationen der einzelnen Ausführungsvarianten untereinander möglich sind und diese Variationsmöglichkeiten aufgrund der Lehre zum technischen Handeln durch gegenständliche Erfindung im Können des auf diesem technischen Gebiet tätigen Fachmannes liegt. Es sind also auch sämtliche denkbaren Ausführungsvarianten, die durch Kombinationen einzelner Details der dargestellten und beschriebenen Ausführungsvariante möglich sind, vom Schutzumfang mit umfasst.

Insbesondere wird festgehalten, dass die dargestellten Vorrichtungen in der Realität auch mehr oder auch weniger Bestandteile als dargestellt umfassen können.

Der Ordnung halber sei abschließend darauf hingewiesen, dass zum besseren Verständnis des Aufbaus der Sandungsanlage 100..110 sowie des Schienenfahrzeugs 25 diese/dieses bzw. deren/dessen Bestandteile teilweise unmaßstäblich und/oder vergrößert und/oder verkleinert dargestellt wurden.

Die den eigenständigen erfinderischen Lösungen zugrundeliegende Aufgabe kann der Beschreibung entnommen werden.

### Bezugszeichenaufstellung

- 100..110: Sandungsanlage/Streugerät
- 2: Zellenradschleuse
- 3: Gehäuseoberteil
- 4: Einlass
- 5: Gehäuseunterteil
- 6: Auslass
- 7: Zellenrad
- 8: Motor
- 9: Sandbehälter/Sandkasten
- 10: Abführrohr/Ableitung
- 11: Sammler
- 12: Welle
- 13: Rührer
- 14: Getriebe
- 15: Planetengetriebe
- 16: Kupplung
- 17: innere Wandung des Sandbehälters
- 18: kegelförmige Abdeckung
- 19: Zuluftrohr
- 20: Abluftrohr
- 21: Gebläse
- 22: Abluftöffnungen
- 23: Aktivator
- 24: Abstützung
- 25: Schienenfahrzeug
- 26: Steuerung für Sandungsanlage
- 27: Verdichter
- 28: Fallrohr
- 29: zentrale Steuerung

## Patentansprüche

1. Sandungsanlage (100.. 110) für ein Schienenfahrzeug (25), umfassend
- ein Gehäuse (3, 5) einer Zellenradschleuse (2),
- ein im Gehäuse (3, 5) drehbar gelagertes Zellenrad (7) mit mehreren Zellen,
- einen im Gehäuse (3, 5) oberhalb des Zellenrads (7) angeordneten Einlass (4) und einen unterhalb des Zellenrads (7) angeordneten Auslass (6),
- einen mit dem Zellenrad (7) gekoppelten Motor (8), welcher oberhalb des genannten Einlasses (4) angeordnet ist,
- einen mit dem Einlass (4) der Zellenradschleuse (2) verbundenen Behälter (9) zur Aufnahme von Bremssand und
- eine mit dem Auslass (6) der Zellenradschleuse (2) verbundenen Ableitung (10) zum Transport von Bremssand,
**dadurch gekennzeichnet, dass**
der Behälter (9) kreiszylindrisch ausgestaltet ist.

2. Sandungsanlage (100.. 110) nach Anspruch 1, **dadurch gekennzeichnet, dass** die Drehachse des Zellenrads (7) vertikal ausgerichtet ist.

3. Sandungsanlage (100.. 110) nach Anspruch 1 oder 2, **dadurch gekennzeichnet, dass** die Drehachse des Zellenrads (7) und die Motorwelle parallel zueinander ausgerichtet oder koaxial oder winkelig zueinander angeordnet sind.

4. Sandungsanlage (100.. 110) nach einem der Ansprüche 1 bis 3, **dadurch gekennzeichnet, dass** der Motor (8) über ein Getriebe (14, 15) mit dem Zellenrad (7) gekoppelt ist.

5. Sandungsanlage (100.. 110) nach einem der Ansprüche 1 bis 4, **dadurch gekennzeichnet, dass** der Motor (8) über eine Welle (12) mit dem Zellenrad (7) gekoppelt ist, welche aus dem genannten Behälter (9) respektive aus der genannten Zuleitung herausgeführt ist.

6. Sandungsanlage (100.. 110) nach Anspruch 5, **dadurch gekennzeichnet, dass** im Verlauf der genannten Welle (12) eine Kupplung (16) vorgesehen ist.

7. Sandungsanlage (100.. 110) nach einem der Ansprüche 1 bis 6, **dadurch gekennzeichnet, dass** der Einlass (4) der Zellenradschleuse (2) mit einem Behälter (9) zur Aufnahme von Bremssand verbunden ist und der Motor (8) oberhalb des genannten Behälters (9) angeordnet ist.

8. Sandungsanlage (100.. 110) nach einem der Ansprüche 1 bis 6, **dadurch gekennzeichnet, dass** der Einlass (4) der Zellenradschleuse (2) mit einem Behälter (9) zur Aufnahme von Bremssand verbunden ist und der Motor (8) in dem genannten Behälter (9) angeordnet ist.

9. Sandungsanlage (100.. 110) nach Anspruch 8, **dadurch gekennzeichnet, dass** der Behälter (9) zumindest abschnittsweise ringförmig mit einer inneren Wandung (17) und einer äußeren Wandung ausgebildet ist und der Motor (8) innerhalb der inneren Wandung (17) angeordnet ist.

10. Sandungsanlage (100.. 110) nach Anspruch 9, **dadurch gekennzeichnet, dass** der von der inneren Wandung (17) eingeschlossene Hohlraum durch eine nach oben gewölbte Abdeckung (18) abgedeckt ist.

11. Sandungsanlage (100.. 110) nach Anspruch 9 oder 10, **dadurch gekennzeichnet, dass** der von der inneren Wandung (17) eingeschlossene Hohlraum durch einen vom Motor (8) angetriebenen Aktivator (23) abgedeckt ist.

12. Sandungsanlage (100.. 110) nach einem der Ansprüche 9 bis 11, **gekennzeichnet durch** eine Zuluftleitung (19), welche in den von der inneren Wandung (17) eingeschlossene Hohlraum führt, und eine Abluftleitung (20), welche aus dem genannten Hohlraum führt.

13. Sandungsanlage (100.. 110) nach Anspruch 12, **gekennzeichnet durch** eine Zuluftleitung (19), welche in den von der inneren Wandung (17) eingeschlossenen Hohlraum führt, und Abluftöffnungen (22) in der inneren Wandung (17).

14. Schienenfahrzeug (25), **gekennzeichnet durch** eine Sandungsanlage (100.. 110) nach einem der Ansprüche 1 bis 13.

## Claims

1. Sanding system (100.. 110) for a rail vehicle (25), comprising
- a housing (3, 5) of a star wheel feeder (2),
- a star wheel (7) which is rotatably mounted in the housing (3, 5) and has a plurality of cells,
- an inlet (4) arranged above the star wheel (7) in the housing (3,5) and an outlet (6) arranged below the star wheel (7),
- a motor (8) which is coupled with the star wheel (7) and which is arranged above said inlet (4),
- a container (9) for receiving braking sand, which is connected to the inlet (4) of the star wheel feeder (2), and
- a discharge line (10) for transporting braking sand, which is connected to the outlet (6) of the star wheel feeder (2),
**characterised in that**
the container (9) has a circular cylindrical configuration.

2. Sanding system (100.. 110) according to claim 1, **characterised in that** the axis of rotation of the star wheel (7) is vertically orientated.

3. Sanding system (100.. 110) according to claims 1 or 2, **characterised in that** the axis of rotation of the star wheel (7) and the motor shaft are orientated parallel to one another or are arranged coaxially with one another or at an angle to one another.

4. Sanding system (100.. 110) according to one of claims 1 to 3, **characterised in that** the motor (8) is coupled with the star wheel (7) via a gear (14, 15).

5. Sanding system (100.. 110) according to one of claims 1 to 4, **characterised in that** the motor (8) is coupled with the star wheel (7) via a shaft (12) which is guided out of said container (9) or out of said supply line.

6. Sanding system (100.. 110) according to claim 5, **characterised in that** a coupling (16) is provided in the course of said shaft (12).

7. Sanding system (100.. 110) according to one of claims 1 to 6, **characterised in that** the inlet (4) of the star wheel feeder (2) is connected to a container (9) for receiving braking sand, and the motor (8) is arranged above said container (9).

8. Sanding system (100.. 110) according to one of claims 1 to 6, **characterised in that** the inlet (4) of the star wheel feeder (2) is connected to a container (9) for receiving braking sand, and the motor (8) is arranged in said container (9).

9. Sanding system (100.. 110) according to claim 8, **characterised in that** the container (9) is at least partially annular with an inner wall (17) and an outer wall, and the motor (8) is arranged within the inner wall (17).

10. Sanding system (100.. 110) according to claim 9, **characterised in that** the cavity enclosed by the inner wall (17) is covered by an upwardly curved cover (18).

11. Sanding system (100.. 110) according to claims 9 or 10, **characterised in that** the cavity enclosed by the inner wall (17) is covered by an activator (23) driven by the motor (8).

12. Sanding system (100.. 110) according to one of claims 9 to 11, **characterised by** an air supply line (19), which leads into the cavity enclosed by the inner wall (17), and an air discharge line (20), which leads out of said cavity.

13. Sanding system (100.. 110) according to claim 12, **characterised by** an air supply line (19), which leads into the cavity enclosed by the inner wall (17), and air discharge openings (22) in the inner wall (17).

14. Rail vehicle (25) **characterised by** a sanding system (100.. 110) according to one of claims 1 to 13.

## Revendications

1. Système (100..110) de sablage pour un véhicule (25) ferroviaire, comprenant
- une enveloppe (3, 5) d'une écluse (2) à roue cellulaire,
- une roue (7) cellulaire à plusieurs cellules, montée tournante dans l'enveloppe (3, 5),
- une entrée (4) disposée au-dessus de la roue (7) cellulaire dans l'enveloppe (3, 5) et une sortie (6) disposée en-dessous de la roue (7) cellulaire,
- un moteur (8) accouplé à la roue (7) cellulaire, qui est disposé au-dessus de ladite entrée (4),
- un récipient (9) communiquant avec l'entrée (4) de l'écluse (2) à roue cellulaire pour la réception de sable de freinage et
- un conduit (10) d'évacuation, communiquant avec la sortie (6) de l'écluse (2) à roue cellulaire, pour le transport de sable de freinage,
**caractérisé en ce que** le récipient (9) est conformé en cylindre de section transversale circulaire.

2. Système (100..110) de sablage suivant la revendication 1, **caractérisé en ce que** l'axe de rotation de la roue (7) cellulaire est dirigé verticalement.

3. Système (100..110) de sablage suivant la revendication 1 ou 2, **caractérisé en ce que** l'axe de rotation de la roue (7) cellulaire et l'arbre du moteur sont dirigés parallèlement l'un à l'autre ou sont disposés co-axialement ou en faisant un angle l'un par rapport à l'autre.

4. Système (100..110) de sablage suivant l'une des revendications 1 à 3, **caractérisé en ce que** le moteur (8) est accouplé à la roue (7) cellulaire par une transmission (14, 15).

5. Système (100..110) de sablage suivant l'une des revendications 1 à 4, **caractérisé en ce que** le moteur est accouplé à la roue (7) cellulaire par un arbre (12), qui est sorti dudit récipient (9) respectivement dudit conduit d'amenée.

6. Système (100..110) de sablage suivant la revendication 5, **caractérisé en ce que** un embrayage (16) est prévu dans le cours dudit arbre (12).

7. Système (100..110) de sablage suivant l'une des revendications 1 à 6, **caractérisé en ce que** l'entrée (4) de l'écluse (2) à roue cellulaire communique avec un récipient (9) de réception de sable de freinage et le moteur (8) est disposé au-dessus dudit récipient (9).

8. Système (100..110) de sablage suivant l'une des revendications 1 à 6, **caractérisé en ce que** l'entrée (4) de l'écluse (2) à roue cellulaire communique avec un récipient (9) de réception de sable de freinage et le moteur (8) est disposé dans ledit récipient (9).

9. Système (100..110) de sablage suivant la revendication 8, **caractérisé en ce que** le récipient (9) est constitué au moins par endroit de manière annulaire, en ayant une paroi (17) intérieure et une paroi extérieure, et le moteur (8) est disposé à l'intérieur de la paroi (17) intérieure.

10. Système (100..110) de sablage suivant la revendication 9, **caractérisé en ce que** l'espace vide enfermé par la paroi (17) intérieure est recouvert d'un recouvrement (18) cintré vers le haut.

11. Système (100..110) de sablage suivant la revendication 9 ou 10, **caractérisé en ce que** l'espace vide enfermé par la paroi (17) intérieure est recouvert d'un activateur (23) entraîné par le moteur (8).

12. Système (100..110) de sablage suivant l'une des revendications 9 à 11, **caractérisé par** un conduit (19) d'amenée, qui conduit dans l'espace vide enfermé par la paroi (17) intérieure, et par un conduit (20) d'évacuation, qui conduit hors dudit espace vide.

13. Système (100..110) de sablage suivant la revendication 12, **caractérisé par** un conduit (19) d'amenée, qui conduit dans l'espace vide enfermé par la paroi (17) intérieure, et par des ouïes (22) d'évacuation de l'air dans la paroi (17) intérieure.

14. Véhicule (25) ferroviaire **caractérisé par** un système (100..110) de sablage suivant l'une des revendications 1 à 13.
